# EUROPÄISCHE PATENTSCHRIFT

(11) **EP 0 451 531 B1**
(45) Veröffentlichungstag und Bekanntmachung des Hinweises auf die Patenterteilung: **28.09.1994**
(21) Anmeldenummer: 91103898.2
(22) Anmeldetag: 14.03.1991
(51) Int. Cl.: H01H 1/42, H02B 11/02

(54) **Elektrische Kontaktanordnung**
Electric contact arrangement
Arrangement de contact électrique

(30) Priorität: 10.04.1990 CH 1225/90
(43) Veröffentlichungstag der Anmeldung: 16.10.1991
(73) Patentinhaber: GEC Alsthom T&D AG, 5036 Oberentfelden (CH)
(72) Erfinder: Suter, Ernst, CH-5742 Kölliken (CH)
(74) Vertreter: Patentanwälte Schaad, Balass, Menzl & Partner AG

(56) Entgegenhaltungen:
- EP-A- 0 107 611
- DE-A- 3 246 430
- US-A- 3 201 556
- US-A- 3 427 419
- US-A- 4 121 067

## Beschreibung

Die Erfindung betrifft eine elektrische Kontaktanordnung, insbesondere für Schaltanlagen mit ausziehbaren Schaltgeräten, mit zwei gegeneinander bewegbaren Kontaktstücken mit zumindest an ihren sich gegenüberstehenden Enden rechteckigem Querschnitt, von denen das erste mit einem Kontaktträger gelenkig verbunden ist, in dem zwei spiegelbildlich zu einer Mittelebene angeordnete Reihen von einzeln gefederten Kontaktfingern gelagert sind, die die beiden Kontaktstücke in Einsteckstellung elektrisch leitend verbinden, wobei die Kontaktfinger einer Reihe mindestens einen, einen Steg und davon abstehende, die Kontaktfinger voneinander distanzierende Abstandsglieder aufweisenden, Führungsrechen, der zusammen mit dem Kontaktträger einstückig gefertigt ist, von aussen umgreifen.

Eine solche Kontaktanordnung ist aus der US-A- 3 427 419 bekannt. Der Kontaktträger besteht bei dieser bekannten Kontaktanordnung aus einem U-förmig gebogenen Blech, dessen Basis beidseitig mit Einschnitten versehen ist und so einen Führungsrechen bildet. Je ein Paar von Kontaktfingern greift in einen Einschnitt ein und wird so gegen das Nachbarpaar distanziert. Jeweils zwei gegenüberliegende Paare von Kontaktfingern werden von je einer Schraubenfeder mit Laschen zueinander gespannt. Die Laschen dienen zugleich zur Distanzierung der Kontaktfinger eines Paares voneinander. An einem Ende sind die Kontaktfinger mit einem Loch versehen. Durch die Löcher aller Kontaktfinger einer Reihe wird lose ein Führungsbolzen gesteckt, der die Finger zusätzlich sichert. Ein mehrfach gebogener Draht distanziert an diesem Ende der Kontaktfinger die Kontaktfingerpaare voneinander. Diese Kontaktanordnung besteht aus einer grossen Zahl von Einzelteilen. Nebst den beiden Kontaktstücken, dem Kontaktträger, den Kontaktfingern, werden je zwei Führungsbolzen und Drähte, sowie je vier Kontaktfinger eine Kontaktdruckfeder, je zwei Bolzen und Laschen benötigt. Der Zusammenbau der Kontaktanordnung ist aufwendig.

Aus der EP-A- 0 107 611 ist eine weitere Kontaktanordnung bekannt. Bei dieser Kontaktanordnung bestehen die Führungsrechen aus einem gestanzten Blech, dessen U-förmig gebogenes Mittelstück mit Fortsätzen mit den Seitenwänden des Kontaktträgers verbunden ist. Von den Schenkeln des U-förmig gebogenen Mittelstückes gehen in einem spitzen Winkel zwischen die Kontaktfinger reichende, die Abstandsglieder bildende Arme weg. Die Kontaktfinger umfassen mit einer Ausnehmung das U-förmige Mittelteil des Führungsrechen und sind dadurch gegen achsiales Verschieben gesichert. Die Kontaktfinger durchdringen den aus den Seitenwänden des Kontaktträgers und der Führungsrechen gebildeten rechteckförmigen Rahmen, d.h. sie umfassen den Führungsrechen von innen. Im ausgesteckten Zustand der Kontaktanordnung stossen je zwei sich gegenüberliegende Kontaktfinger aneinander. Bei dieser bekannten Kontaktanordnung muss deshalb der Kontaktträger aus mehreren Teilen zusammengabaut sein, da es beim fertig montierten Kontaktträger nicht möglich ist, Kontaktfinger einzubauen oder zu entfernen. Je Fingerreihe ist nur ein einziges, aus Blech gestanztes und geprägtes Federelement vorhanden, bestehend aus einem zentralen Steg und davon ausgehenden Armen, deren Enden auf den Enden der Kontaktfinger aufliegen. Das Federelement stützt sich mit dem zentralen Steg auf einer Traverse des Kontaktträgers ab. Auch diese Kontaktanordnung besteht aus einer grossen Zahl von Einzelteilen, nämlich nebst den beiden Kontaktstücken und den Kontaktfingern aus zwei Federelementen und einem aus sechs Teilen (je zwei Seitenwände, Führungsrechen und Traversen) bestehenden Kontaktträger. Auch die Montage gestaltet sich aufwendig, da der Kontaktträger erst fertig zusammengebaut werden kann, nachdem die Kontaktfinger eingelegt worden sind.

Auch in der US-A- 3 201 556 wird eine Kontaktanordnung gezeigt, die je Kontaktfingerreihe ein einstückiges Federelement hat. Die Kontaktfinger einer Reihe liegen jedoch aneinander an, so dass sie schlecht gekühlt werden und sich nicht unabhängig voneinander bewegen können. Der Kontaktkörper umgreift die Federelemente. Diese müssen bei der Montage deshalb mühsam axial eingeschoben werden.

Aufgabe der vorliegenden Erfindung ist es, eine Kontaktanordnung der genannten Art anzugeben, die aus einem Minimum von Einzelteilen besteht, einfach zu montieren ist und deshalb kostengünstig herstellbar ist.

Diese Aufgabe wird durch die im Kennzeichenteil des Anspruchs 1 angegebenen Merkmale gelöst.

Die Stege der Federelemente sind vorzugsweise an ihren Enden durch Zungen verlängert, die in am Kontaktträger angebrachte Oeffnungen eingreifen.

In einer bevorzugten Ausführungsform sind die im Kontaktträger angebrachten Oeffnungen rechteckig und die Zungen mit eingeprägten Nocken versehen, die an den Rand der rechteckigen Oeffnungen anstossen und damit das Federelement gegen Verschieben in Richtung des zentralen Steges sichern.

In einer anderen bevorzugten Ausführungsform haben die Zungen der Federelemente an ihren Enden je einen Absatz und die am Kontaktträger angebrachten Oeffnungen die Form zweier aneinanderstossender Rechtecke verschiedener Breite, welche Breiten den Breiten der Zungen beidseits des Absatzes entsprechen, wobei die Absätze durch Anstossen an den Rand des schmäleren Teils der Oeffnungen das Federelement gegen Verschieben in Richtung des zentralen Steges sichern.

Vorteilhafterweise sind die zentralen Stege der Federelemente an ihren Enden schmäler als in der Mitte und die äusseren Arme der Federelemente entsprechend länger als die inneren.

Der Kontaktträger besteht vorzugsweise aus zwei ebenen Seitenwänden und mindestens zwei die Seitenwände miteinander verbindenden Führungsrechen.

Die Seitenwände des Kontaktträgers auf der dem Gegenkontaktstück zugewandten Seite sind in einer bevorzugten Ausführungsform U-förmig ausgeschnitten. Je ein Führungsrechen verbindet die Seitenwände an den beiden Enden und an der Basis der U-Form.

Der Kontaktträger wird vorzugsweise aus Metall durch Druckgiessen hergestellt.

Die Erfindung wird anhand der Figuren näher erläutert. Es zeigen:
- die Fig.1 eine Draufsicht auf eine erfindungsgemässe Kontaktanordnung,
- die Fig.2 einen Schnitt längs der mit II-II in der Fig.1 angedeuteten Schnittebene,
- die Fig.3 den Kontaktträger der Kontaktanordnung nach Fig.2 und das zugehörige Kontaktstück in der gegenseitigen Lage bei Beginn der Montage,
- die Fig.4 den Kontaktträger in isometrischer Darstellung,
- die Fig.5 das erste Kontaktstück, ebenfalls in isometrischer Darstellung,
- die Fig.6 das erste Kontaktstück in einer anderen Ausführung, ebenfalls in isometrischer Darstellung,
- die Fig.7 und 8 ein Federelement der Kontaktanordnung im Grund- bzw. Aufriss,
- die Fig.9 ein Detail des Kontaktträgers in einer anderen Ausführungsform, und
- die Fig.10 einen Ausschnitt eines Federelementes der entsprechenden Ausführungsform.

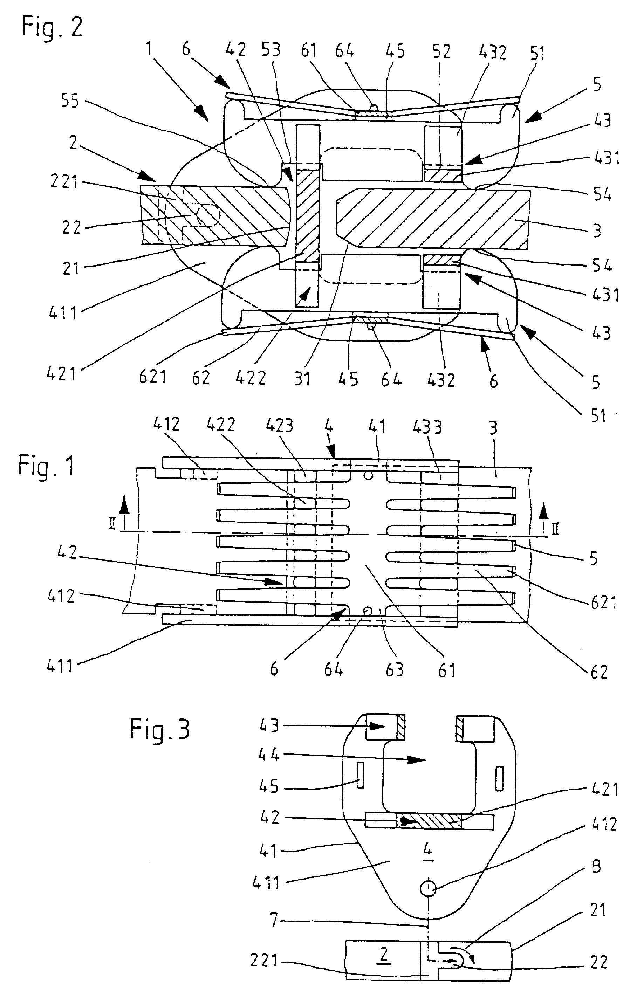

In den Fig.1 und 2 ist eine erfindungsgemässe Kontaktanordnung 1 in der Einsteckstellung gezeigt. Sie verbindet die beiden Kontaktstücke 2 und 3 miteinander. Das erste Kontaktstück 2 ist z.B. mit einem Anschluss eines fahrbaren Leistungsschalters verbunden, das Gegenkontaktstück 3 mit der Sammelschiene oder dem Abgang einer Schaltanlage. Durch horizontales Verschieben lässt sich der Leistungsschalter von der Sammelschiene bzw. dem Abgang trennen.

Die Kontaktanordnung 1 besteht neben den beiden Kontaktstücken 2, 3 aus einem Kontaktträger 4, zwei Reihen von Kontaktfingern 5 und zwei Federelementen 6.

Die beiden Kontaktstücke 2, 3 und die Kontaktfinger 5 bestehen aus gut leitendem Material wie Kupfer und sind vorzugsweise zumindest in der Gegend ihrer Kontaktstellen versilbert. Der Kontaktträger 4 wird vorzugsweise durch Druckgiessen aus Metall hergestellt, kann aber auch aus thermoplastischem oder duroplastischem Kunststoff sein.

Im Bereich der Kontaktanordnung 1 haben die beiden Kontaktstücke 2, 3 rechteckigen Querschnitt. Das Ende 21 des ersten Kontaktstückes 2 ist leicht abgerundet, das Ende 31 des Gegenkontaktstückes 3 ist abgeschrägt.

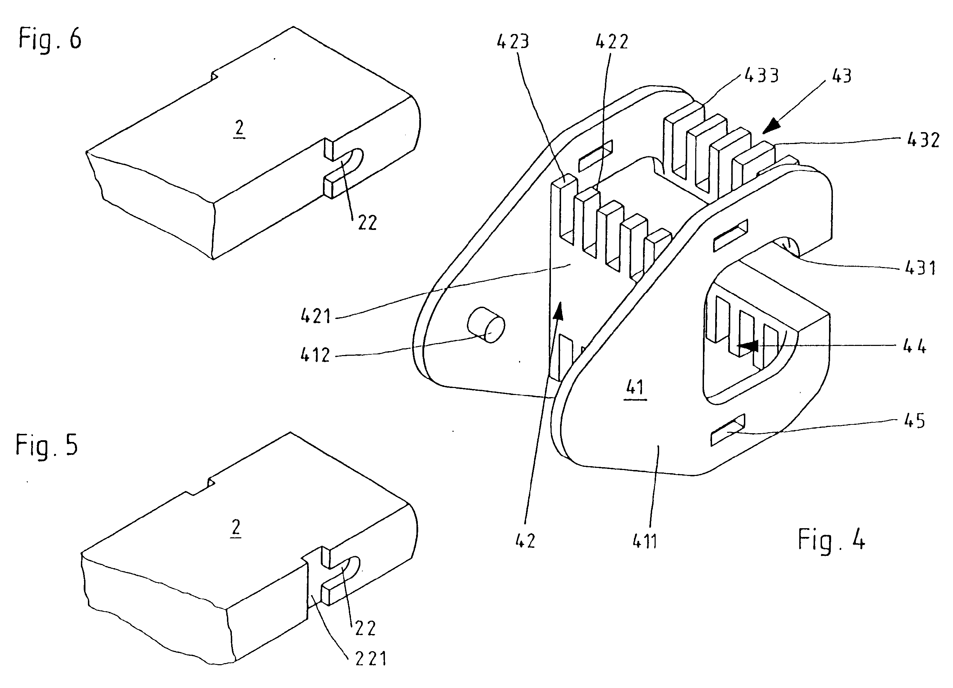

Wie besonders aus Fig.4 ersichtlich ist, besteht der Kontaktträger 4 aus zwei Seitenwänden 41. Diese haben auf der dem Gegenkontaktstück 3 zugewandten Seite je einen Ausschnitt 44, so dass die Seitenwände 41 die Form eines U annehmen. Dank dem Ausschnitt 44 kann die Kontaktanordnung 1 auch Gegenkontaktstücke 3 aufnehmen, deren Breite grösser ist als der Abstand zwischen den Seitenwänden 41. Somit lassen sich Fehlausrichtungen der Kontaktstücke 2, 3 tolerieren. Die Seitenwände 41 sind am Grund des Ausschnitts 44 durch einen Steg 421 und an den Rändern des Ausschnitts 44 durch zwei weitere Stege 431 miteinander verbunden. Diese Stege tragen Abstandsglieder 422, 432, welche zusammen mit den Stegen 421, 431 Führungsrechen 42, 43 für die Kontaktfinger 5 bilden. Weitere Abstandsglieder 423, 433 distanzieren die Kontaktfinger 5 auch von den Seitenwänden 41. Dank der Abstandsglieder 422, 423, 432, 433 sind die Kontaktfinger 5 gegeneinander und gegenüber den Seitenwänden 41 distanziert. Sie werden dadurch gut von der umgebenden Luft gekühlt und der Kontaktdruck der Kontaktfinger 5 wird nicht durch Reibungskräfte der Kontaktfinger 5 untereinander beeinflusst.

Die Kontaktfinger 5 (Fig.2) sind symmetrisch aufgebaut. Auf der einen Längsseite weisen sie in der Gegend der Enden je eine vorspringende Kontaktstelle 54, 55 und dazwischen zwei rechteckige Einschnitte 52, 53 auf. Der Einschnitt 52 umfasst mit geringem axialem Spiel einen der Stege 431. Dadurch wird ein axiales Verschieben der Kontaktfinger 5 gegenüber dem Kontaktträger 4 verhindert. Der Einschnitt 53 umfasst mit mehr Spiel den Steg 421. Auf der anderen Längsseite haben die Kontaktfinger 5 an den Enden je eine Kuppe 51.

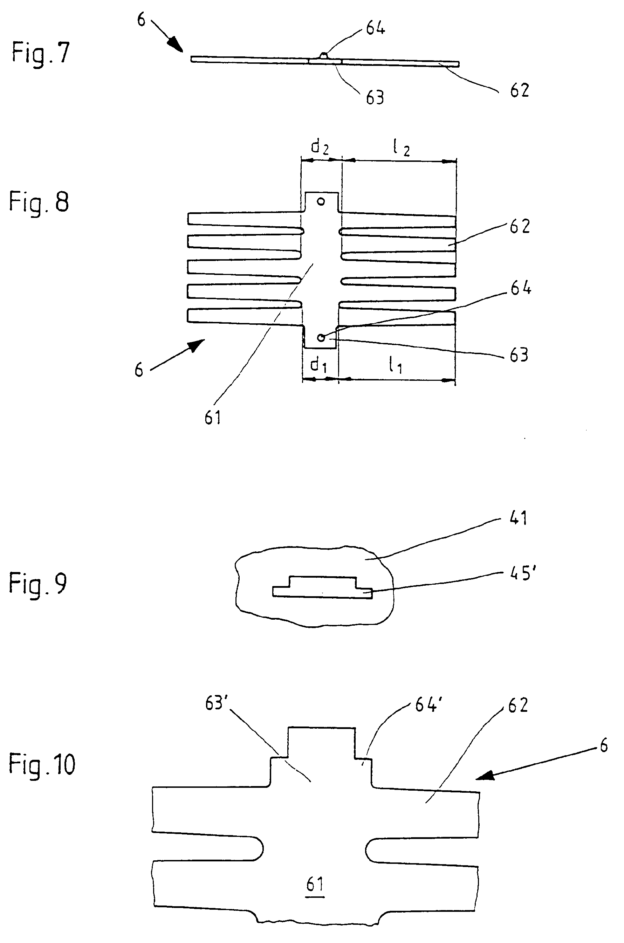

Der Kontaktdruck aller Kontaktfinger 5 wird je Seite von einem einzigen Federelement 6 (Fig.7 und 8) erzeugt. Dieses ist aus einem flachen Blech aus Federmaterial gestanzt und besteht aus einem zentralen Steg 61 und davon beidseitig kammartig abstehenden Armen 62. Die Enden 621 der Arme 62 liegen je auf einer einzelnen Kuppe 51 eines Kontaktfingers 5 auf. Der zentrale Steg 61 wird beidseitig durch Zungen 63 fortgesetzt, die in rechteckige Oeffnungen 45 in den Seitenwänden 41 des Kontaktträgers 4 eingreifen. In der Nähe der Enden der Zungen 63 sind Nocken 64 eingeprägt, die an den Seitenwänden 41 anstehen und damit ein Verschieben der Federelemente 6 quer zu den Kontaktfingern 5 verhindern.

Der zentrale Steg 61 wird bei Belastung der Arme 62 leicht durchgebogen. Die auf die mittleren Kontaktfinger 5 wirkende Federkraft ist deshalb etwas geringer als die auf die äusseren Kontaktfinger 5 wirkende. Dieser Unterschied kann dadurch kompensiert werden, dass die Breite d₁ der zentralen Stege 61 an ihren Enden etwas geringer gemacht wird als die Breite d₂ in der Mitte und die Länge l₁ der äusseren Arme 62 der Federelemente 6 entsprechend länger gemacht wird als die Länge l₂ der inneren.

Auf der dem Gegenkontaktstück 3 abgewandten Seite bilden die Seitenwände 41 des Kontaktträgers 4 zwei über den Steg 42 vorstehende Schenkel 411, die das erste Kontaktstück 2 umfassen (Fig.4). Auf den einander zugekehrten Innenseiten dieser Schenkel 411 sitzt je ein Zapfen 412.

Am ersten Kontaktstück 2 (Fig.5) sind auf den Schmalseiten Nuten 22 eingefräst. Die Breite dieser Nuten 22 entspricht dem Durchmesser der Zapfen 412. Die Nuten 22 sind in Richtung gegen das Gegenkontaktstück 3 hin geschlossen, in der Gegenrichtung münden sie in Quernuten 221, die beidseitig offen sind. Alternativ können die Quernuten 221 auch einseitig geschlossen sein, oder es kann (Fig.6) die Breite des ersten Kontaktstückes 2 am vom Gegenkontaktstück 3 abgewandten Ende der Nuten 22 reduziert sein, so dass die Nuten 22 an diesem Ende offen sind.

Zur Montage der Kontaktanordnung 1 auf das erste Kontaktstück 2 wird der Kontaktträger 4 in die in Fig. 3 gezeigte Lage bezüglich des ersten Kontaktstückes 2, d.h. mit seiner Symmetrieebene in eine Ebene durch die Schwenkachse senkrecht zur Längsachse des ersten Kontaktstückes 2, gebracht. Der Kontaktträger 4 wird nun gemäss dem Pfeil 7 so verschoben, dass die Zapfen 412 in die Nuten 22 eingeführt werden, bis die Zapfen 412 am geschlossenen Ende der Nuten 22 anstehen. Darauf wird der Kontaktträger 4 gemäss dem Pfeil 8 im Uhrzeigersinn um 90° in die normale Betriebslage abgedreht. Der Steg 42 befindet sich dann unmittelbar vor dem Ende 21 des ersten Kontaktstückes 2 und verhindert dadurch, dass sich die Zapfen 412 rückwärts aus den Nuten 22 entfernen können.

Nun werden zuerst auf der einen Seite die Kontaktfinger 5 eingelegt und mit dem Federelement 6 gesichert, wobei zuerst eine Zunge 63 in die entsprechende rechteckige Oeffnung 45 eingefüht wird, anschliessend Druck auf den zentralen Steg 61 ausgeübt wird, so dass die andere Zunge 63 in ihre zugehörige rechteckige Oeffnung 45 eingeführt werden kann, bis die Nocken 64 zwischen den Seitenwänden 41 einrasten. Schliesslich werden auf die gleiche Art die Kontaktfinger 5 der anderen Seite eingelegt.

Die Kontaktfinger 5 liegen (bei noch ausgestecktem Gegenkontaktstück 3) mit ihren Einschnitten 52 auf den weiteren Stegen 431 auf. Die Kontaktstellen 54 gegenüberliegender Kontaktfinger 5 sind daher voneinander distanziert, was das Einführen des Gegenkontaktstückes 3 erleichtert. Zudem behalten die Federelemente 6 eine erhebliche Vorspannung und drücken die Kontaktfinger 5 an den Kontaktstellen 55 mit grosser Kraft auf das erste Kontaktstück 2, wodurch eine zentrierende Wirkung entsteht. Die eingelegten und mit den Federelementen 6 gesicherten Kontaktfinger 5 beschränken den Winkel, um den der Kontaktträger 4 um die Zapfen 412 geschwenkt werden kann, so dass deshalb der Steg 421 immer gegen das Ende 21 des ersten Kontaktstückes 2 stösst und die Zapfen 412 in den Nuten 22 nicht verschoben werden können. Somit kann auch der Kontaktträger 4 nicht vom ersten Kontaktstück 2 gelöst werden.

In den Fig.9 und 10 wird eine weitere Ausführungsart der Befestigung des Federelementes am Kontaktträger 4 gezeigt. Die Zungen 63′ (Fig.10) der Federelemente 6 haben an ihren Enden je einen Absatz 64′. Die am Kontaktträger 4 angebrachten Oeffnungen 45′ (Fig.9) haben die Form zweier aneinanderstossender Rechtecke verschiedener Breite. Diese Breiten entsprechen den Breiten der Zungen 63′ beidseits des Absatzes 64′. Das Federelement 6 wird durch Anstossen der Absätze 64′ an den Rand des schmäleren Teils der Oeffnungen 45′ gegen Verschieben in Richtung des zentralen Steges 61 gesichert. Diese Ausführungsform hat den Vorteil, dass das Federelement 6 durch einen einzigen Stanzvorgang hergestellt werden kann, während bei der Ausführungsform nach den Fig.7 und 8 nach dem Stanzen noch die Nocken 64 geprägt werden müssen.

Die erfindungsgemässe Kontaktanordnung 1 besteht, abgesehen von den beiden Kontaktstücken 2, 3 aus nur 3 Arten von Teilen, nämlich aus einem Kontaktträger 4, aus einer Anzahl Kontaktfinger 5 und aus zwei Federelementen 6. Weitere Teile wie Befestigungselemente, Schrauben, Bolzen oder Splinten werden nicht benötigt.

## Patentansprüche

1. Elektrische Kontaktanordnung (1), insbesondere für Schaltanlagen mit ausziehbaren Schaltgeräten, mit zwei gegeneinander bewegbaren Kontaktstücken (2, 3) von zumindest an ihren sich gegenüberstehenden Enden (21, 31) rechteckigem Querschnitt, von denen das erste (2) mit einem Kontaktträger (4) gelenkig verbunden ist, in dem zwei spiegelbildlich einer Mittelebene angeordnete Reihen von einzeln gefederten Kontaktfingern (5) gelagert sind, die die beiden Kontaktstücke (2, 3) in Einsteckstellung elektrisch leitend verbinden, wobei die Kontaktfinger einer Reihe mindestens einen, einen Steg (421, 431) und davon abstehende, die Kontaktfinger (5) voneinander distanzierende Abstandsglieder (422, 423, 432, 433) aufweisenden, Führungsrechen (42, 43), der zusammen mit dem Kontaktträger (4) einstückig gefertigt ist, von aussen umgreifen, **dadurch gekennzeichnet,** dass zur Federung der Kontaktfinger (5) jeder Reihe je ein einstückiges, einen zentralen Steg (61) und hiervon ausgehende Arme (62) aufweisendes Federelement (6) verwendet wird, dessen Steg (61) an seinen Enden durch Zungen (63) verlängert ist, die in am Kontaktträger (4) angebrachte Oeffnungen (45) eingreifen, um den Steg (61) über die Zungen (63) am Kontaktträger (4) selbst abzustützen.

2. Kontaktanordnung nach Anspruch 1, **dadurch gekennzeichnet,** dass die im Kontaktträger (4) angebrachten Oeffnungen (45) rechteckig sind und die Zungen (63) mit eingeprägten Nocken (64) versehen sind, die an den Rand der rechteckigen Oeffnungen (45) anstossen und damit das Federelement (6) gegen Verschieben in Richtung des zentralen Steges (61) sichern.

3. Kontaktanordnung nach Anspruch 1, **dadurch gekennzeichnet,** dass die Zungen (63′) der Federelemente (6) an ihren Enden je einen Absatz (64′) haben und die am Kontaktträger (4) angebrachten Oeffnungen (45′) die Form zweier aneinanderstossender Rechtecke verschiedener Breite haben, welche Breiten den Breiten der Zungen (63′) beidseits des Absatzes (64′) entsprechen, wobei die Absätze durch Anstossen an den Rand des schmäleren Teils der Oeffnungen (45′) das Federelement (6) gegen Verschieben in Richtung des zentralen Steges (61) sichern.

4. Kontaktanordnung nach einem der Ansprüche 1 bis 3, **dadurch gekennzeichnet,** dass die zentralen Stege (61) der Federelemente (6) an ihren Enden schmäler sind als in der Mitte und die äusseren Arme (62) der Federelemente (6) entsprechend länger sind als die inneren.

5. Kontaktanordnung nach einem der Ansprüche 1 bis 4, **dadurch gekennzeichnet,** dass der Kontaktträger (4) aus zwei ebenen Seitenwänden (41) und mindestens zwei die Seitenwände (41) miteinander verbindenden Führungsrechen (42, 43) besteht.

6. Kontaktanordnung nach Anspruch 5, **dadurch gekennzeichnet,** dass die Seitenwände (41) des Kontaktträgers (4) auf der dem Gegenkontaktstück (3) zugewandten Seite U-förmig ausgeschnitten sind und je ein Führungsrechen (42, 43) die Seitenwände (41) an den beiden Enden und an der Basis der U-Form verbindet.

7. Kontaktanordnung nach einem der Ansprüche 1 bis 6, **dadurch gekennzeichnet,** dass der Kontaktträger (4) durch Druckgiessen hergestellt wird.

8. Kontaktanordnung nach einem der Ansprüche 1 bis 7, **dadurch gekennzeichnet,** dass der Kontaktträger (4) aus Metall gefertigt ist.

## Claims

1. An electrical contact arrangement (1), more particularly for switchgear with withdrawable switching devices, comprising two contact pieces (2, 3) which are movable towards one another and the cross-section of which is rectangular at least at their mutually opposite ends (21, 31), the first (2) of which is flexibly connected to a contact carrier (4) in which there are mounted two rows, arranged in mirror-image relationship to a median plane, of individually spring-loaded contact fingers (5) which connect the two contact pieces (2, 3) electrically conductively in the inserted position, the contact fingers of one row embracing from the outside at least one guide rack (42, 43) having a bar (421, 431) and spacer elements (422, 423, 432, 433) projecting from the bar and spacing the contact fingers (5) from one another, the guide rack being manufactured as one piece together with the contact carrier (4), characterized in that in order to spring-load the contact fingers (5) of each row, a single-piece spring element (6) is employed in each case which has a central bar (61) and arms (62) extending therefrom, the bar (61) of which is extended at its ends by tongues (63) which engage into openings (45) located on the contact carrier (4) so as to support the bar (61) by way of the tongues (63) on the contact carrier (4) itself.

2. A contact arrangement according to claim 1, characterized in that the openings (45) located in the contact carrier (4) are rectangular and the tongues (63) are provided with impressed cams (64) which abut the margin of the rectangular openings (45) and thereby secure the spring element (6) from shifting in the direction of the central bar (61).

3. A contact arrangement according to claim 1, characterized in that the tongues (63′) of the spring elements (6) each have a step (64′) at their ends and the openings (45′) located on the contact carrier (4) are in the shape of two mutually adjoining rectangles of different widths, these widths corresponding to the widths of the tongues (63′) on either side of the step (64′), wherein the steps secure the spring element (6) from shifting in the direction of the central bar (61) by abutting the margin of the narrower part of the openings (45′).

4. A contact arrangement according to one of claims 1 to 3, characterized in that the central bars (61) of the spring elements (6) are narrower at their ends than in the middle and the outer arms (62) of the spring elements (6) are accordingly longer than the inner ones.

5. A contact arrangement according to one of claims 1 to 4, characterized in that the contact carrier (4) consists of two plane side walls (41) and at least two guide racks (42, 43) which join the side walls (41) together.

6. A contact arrangement according to claim 5, characterized in that the side walls (41) of the contact carrier (4) are cut out in the shape of a U on the side facing the counter-contact piece (3) and respective guide racks (42, 43) join the side walls (41) at the two ends and at the base of the U-shape.

7. A contact arrangement according to one of claims 1 to 6, characterized in that the contact carrier (4) is manufactured by die-casting.

8. A contact arrangement according to one of claims 1 to 7, characterized in that the contact carrier (4) is made of metal.

## Revendications

1. Dispositif de contact électrique (1), en particulier pour postes à appareils débrochables, comportant deux pièces de contact (2, 3) mobiles l'une par rapport à l'autre et de section rectangulaire au moins à leurs extrémités en regard (21, 31), la première (2) étant articulée à un porte-contact (4) dans lequel sont montées deux rangées placées symétriquement par rapport à un plan médian de doigts de contact (5) montés individuellement à ressort qui relient électriquement les deux pièces de contact (2, 3) en position enfichée, les doigts de contact d'une rangée embrassant de l'extérieur au moins un râteau de guidage (42, 43) qui est fabriqué d'une seule pièce avec le porte-contact (4) et présente une barrette (421, 431) et des éléments entretoises (422, 423, 432, 433) partant de celle-ci et écartant les doigts de contact (5) les uns des autres,
caractérisé par le fait que pour le montage à ressort des doigts de contact (5) de chaque rangée est utilisé un élément élastique d'une seule pièce (6) qui présente une âme (61) et des bras (62) partant de celle-ci et dont l'âme (61) est prolongée à ses extrémités par des languettes (63) qui s'engagent dans des ouvertures (45) faites dans le porte-contact (4) pour l'appui de l'âme (61) sur le porte-contact (4) lui-même par les languettes (63).

2. Dispositif de contact selon la revendication 1, caractérisé par le fait que les ouvertures (45) faites dans le porte-contact (4) sont rectangulaires et les languettes (63) sont pourvues de saillies (64) faites par estampage qui s'appuient sur le bord des ouvertures rectangulaires (45) et ainsi empêchent l'élément élastique (6) de se déplacer dans la direction de l'âme (61).

3. Dispositif de contact selon la revendication 1, caractérisé par le fait que les languettes (63′) des éléments élastiques (6) ont à chaque extrémité un talon (64′) et les ouvertures (45′) faites dans le porte-contact (4) ont la forme de deux rectangles contigus de largeurs différentes, ces largeurs correspondant aux largeurs des languettes (63′) de part et d'autre du talon (64′), les talons empêchant l'élément élastique (6) de se déplacer dans la direction de l'âme (61) en s'appliquant contre le bord de la partie étroite des ouvertures (45′).

4. Dispositif de contact selon l'une des revendications 1 à 3, caractérisé par le fait que l'âme (61) des éléments élastiques (6) est plus étroite à ses extrémités qu'au milieu et les bras (62) extérieurs des éléments élastiques (6) sont plus longs de façon correspondante que les bras intérieurs.

5. Dispositif de contact selon l'une des revendications 1 à 4, caractérisé par le fait que le porte-contact (4) est constitué de deux parois latérales planes (41) et d'au moins deux râteaux de guidage (42, 43) reliant ces parois latérales (41).

6. Dispositif de contact selon la revendication 5, caractérisé par le fait que les parois latérales (41) du porte-contact (4) sont échancrées en U du côté de la deuxième pièce de contact (3) et un râteau de guidage (42, 43) relie ces parois latérales (41) à chaque extrémité et à la base du U.

7. Dispositif de contact selon l'une des revendications 1 à 6, caractérisé par le fait que le porte-contact (4) est fabriqué par moulage sous pression.

8. Dispositif de contact selon l'une des revendications 1 à 7, caractérisé par le fait que le porte-contact (4) est en métal.
